# EUROPEAN PATENT APPLICATION

(11) **EP 3 855 537 A1**
(43) Date of publication of application: **28.07.2021**
(21) Application number: 19873078.0
(22) Date of filing: 16.10.2019
(51) Int. Cl.: H01M 4/14, H01M 4/20, H01M 4/56, H01M 4/62, H01M 4/73, H01M 4/82

(54) **LEAD STORAGE BATTERY**

(30) Priority: 16.10.2018 JP 2018194795
(71) Applicant: GS Yuasa International Ltd., Kisshoin, Minami-ku, Kyoto-shi, Kyoto 601-8520 (JP)
(72) Inventor: ONISHI, Mikito, Kyoto-shi, Kyoto 601-8520 (JP)
(74) Representative: Isarpatent
(86) International application number: PCT/JP2019/040715
(87) International publication number: WO 2020/080419

(57) **Abstract**

A positive electrode plate included in a lead-acid battery is provided with a current collector and a positive electrode material. The current collector has a frame rib and inner ribs inside the frame rib. The frame rib includes an upper element, a lower element, and a pair of side elements coupling the upper element with the lower element. The inner rib includes a longitudinal rib extending in a first direction from the upper element toward the lower element, and a transverse rib extending in a second direction from one side element toward the other side element. A striped pattern of a metallic fibrous structure is seen in a cross-section perpendicular to the first direction of the longitudinal rib. An outer peripheral region of the cross-section is made up of a first portion in which the fibrous structure extends along the contour of the cross-section and a second portion except for the first portion. A percentage R2 of a length of the contour corresponding to the second portion to a total length of the contour of the cross-section is less than 50%. The positive electrode material includes Sn and/or Sb. A content c1 of Sn in the positive electrode material is less than 0.75% by mass, a content c2 of Sb in the positive electrode material is less than 0.50% by mass, and a total c3 of c1 and c2 is less than 0.8% by mass.

## Description

### TECHNICAL FIELD

The present invention relates to a lead-acid battery.

### BACKGROUND ART

A lead-acid battery is provided with an electrode plate group in which a positive electrode plate and a negative electrode plate are alternately stacked with a separator therebetween. The electrode plate is made up of a current collector and an electrode material held by the current collector. As a current collector, a punched grid formed by press-punching has fewer restrictions on grid design than an expanded grid and has the advantage that a grid design excellent in conductivity can be selected.

Patent Document 1 proposes that in a lead grid plate formed by press-punching a rolled plate of a lead alloy, the thicknesses of inner longitudinal and transverse bars are made smaller than the thickness of an outer frame, the thickness of the outer frame is in the range of 0.8 to 1.5 mm, and the thicknesses of the inner bars are in the range of 0.6 to 0.8 mm. It is also proposed that the inner frame of the lead grid plate formed by press-punching a rolled plate of a lead alloy having a thickness of 1.2 to 1.5 mm is deformed in the thickness direction to set the thicknesses of the inner longitudinal and transverse bars in the range of 0.6 to 0.8 mm.

Patent Document 2 proposes that in a flooded-type lead-acid battery, a ratio (Vp + Vn)/Ve of a total volume Vp + Vn of a total pore volume Vp of the positive active material and a total pore volume Vn of the negative active material to a volume Ve of the electrode plate group is from 0.27 to 0.32, and a ratio Vp/Ve of the total pore volume Vp of the positive active material to the volume Ve of the electrode plate group is from 0.13 to 0.15. It is also described that an antimony content in the positive active material is from 0.04 to 0.25% by mass.

Patent Document 3 discloses that in a lead-acid battery in which an electrolyte solution contains sulfuric acid and A1 ions, and a chemically converted positive active material contains Sn, the concentration of Sn in the chemically converted positive active material is from 0.05 to 1.0 mass% in terms of metallic Sn, the concentration of A1 ions in the electrolyte solution is from 0.02 to 0.2 mol/L, and a Pb-Sb-based alloy layer having an Sb concentration of 1.0 to 10 mass% in terms of metallic Sb is provided on the surface layer of a part of a positive electrode grid made of a Pb-Ca-based alloy.

### PRIOR ART DOCUMENTS

### PATENT DOCUMENTS

Patent Document 1: JP-A-51-60936
Patent Document 2: JP-A-2015-38860
Patent Document 3: JP-A-2016-225302

### SUMMARY OF THE INVENTION

### PROBLEMS TO BE SOLVED BY THE INVENTION

In lead-acid batteries, the life performance may deteriorate due to the degradation of the positive electrode. Possible degradation modes of the positive electrode are, for example, sulfation, the dropping or softening of the positive electrode material, the corrosion of the current collector, and the like.

Meanwhile, the state of the current collector varies greatly depending on the processing method and processing conditions. When the state of the current collector is different, adhesion to the positive electrode material and corrosion resistance are also different. Thus, depending on the state of the current collector, sufficient life performance may not be obtained. In addition, the life performance varies greatly depending on charge-discharge conditions.

### MEANS FOR SOLVING THE PROBLEMS

One aspect of the present invention is a lead-acid battery including: a positive electrode plate; a negative electrode plate; and an electrolyte solution. The positive electrode plate includes a current collector and a positive electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element with the lower element. The inner rib includes a longitudinal rib extending in a first direction from the upper element toward the lower element, and a transverse rib extending in a second direction from one of the side elements toward the other of the side elements. A striped pattern of a metallic fibrous structure is seen in a cross-section perpendicular to the first direction of the longitudinal rib. An outer peripheral region of the cross-section is made up of a first portion in which the fibrous structure extends along a contour of the cross-section and a second portion except for the first portion. A percentage R2 of a length of the contour corresponding to the second portion to a total length of the contour of the cross-section is less than 50%. The positive electrode material includes at least one selected from the group consisting of Sn and Sb. A content c1 of Sn in the positive electrode material is less than 0.75% by mass. A content c2 of Sb in the positive electrode material is less than 0.50% by mass. A total c3 of c1 and c2 is less than 0.8% by mass.

### ADVANTAGES OF THE INVENTION

According to the lead-acid battery in the above aspect of the present invention, it is possible to ensure high lifetime performance in deep cycles.

### BRIEF DESCRIPTION OF THE DRAWINGS

Fig. 1A is a plan view showing an appearance of a current collector used for a lead-acid battery according to one embodiment of the present invention.
Fig. 1B is a plan view showing an appearance of a current collector used in a lead-acid battery according to another embodiment.
Fig. 2A is a cross-sectional photograph of a cross-section (section C) of a longitudinal rib of a current collector perpendicular to a first direction.
Fig. 2B is a conceptual view of a section C.
Fig. 3 is a cross-sectional photograph of a section G of the inner rib of the current collector perpendicular to the second direction.
Fig. 4 is a cross-sectional conceptual view showing the progress of corrosion of the inner rib of the current collector.
Fig. 5 is a perspective view showing an external appearance of a lead-acid battery according to one embodiment of the present invention.

### MODE FOR CARRYING OUT THE INVENTION

A lead-acid battery according to one embodiment of the present invention includes a positive electrode plate, a negative electrode plate, and an electrolyte solution. The positive electrode plate includes a current collector and a positive electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element and the lower element. The inner rib includes a longitudinal rib extending in a first direction from the upper element toward the lower element, and a transverse rib extending in a second direction from one side element toward the other side element. The first direction is a direction parallel to the side element, and the second direction is a direction parallel to the upper element and the lower element.

The longitudinal rib may extend parallel to the side elements or may extend obliquely with respect to the side elements. The longitudinal rib may be straight, curved, or slightly bent. That is, the longitudinal rib may only extend so that a vector in the first direction is larger than a vector in the second direction.

The transverse rib may extend parallel to the upper or lower element and may extend obliquely with respect to the upper or lower element. The transverse rib may be straight, curved, or slightly bent. That is, the transverse rib may only extend so that a vector in the second direction is larger than a vector in the first direction.

The cross-section of the longitudinal rib perpendicular to the first direction, that is, the cross-section parallel to the upper element and parallel to the thickness direction (hereinafter also referred to as section C), shows a striped pattern of a metallic fibrous structure. An outer peripheral region of the section C is made up of a first portion in which the fibrous structure (the direction of the stripes) extends along the contour of the section C and a second portion except for the first portion. The contour of the section C means a line corresponding to the outer surface of the longitudinal rib. The outer peripheral region of the section C is a peripheral region along the contour of the section C, has a depth of at least 55 pm or more from a line corresponding to the outer surface in the section C, and preferably has a depth of 100 pm or more. In the second portion in the section C, no striped pattern may be observed, and a striped pattern extending in the depth direction of the outer peripheral region may be observed.

Here, a percentage R2 of the length of the contour corresponding to the second portion to a total length of the contour of the section C is less than 50%. Thus, when the percentage R2 is controlled, the cross-section perpendicular to the fiber length of the fibrous structure is hardly exposed on the outer surface of the outer peripheral region of the section C. The cross-section perpendicular to the fiber length of the fibrous structure has many grain boundaries. The first portion and the second portion are different in the form of progress of corrosion.

The positive electrode material includes at least one selected from the group consisting of Sn and Sb. The content c1 of Sn in the positive electrode material is less than 0.75% by mass, the content c2 of Sb in the positive electrode material is less than 0.50% by mass, and the total c3 of c1 and c2 is less than 0.8% by mass.

As described above, in the above aspect of the present invention, the percentage R2 of the length of the contour corresponding to the second portion to the total length of the contour of the section C of the longitudinal rib is set to be less than 50%, and the content c1 of Sn, the content c2 of Sb, and the total c3 of these contents in the positive electrode material are controlled within the above range. It is thereby possible to improve the life performance of the lead-acid battery in deep cycles. The reason why the life performance in the deep cycles is improved will be more specifically described below.

A first cross-section (section C) of the longitudinal rib has a second portion perpendicular to the striped pattern of the fibrous structure. That the percentage R2 of the second portion is less than 50% in the longitudinal rib means that the percentage of the length of the contour corresponding to the first portion to the total length of the contour of the section C is more than 50%. On the other hand, in the cross-section perpendicular to the second direction of the transverse rib, that is, in the cross-section parallel to the side element and parallel to the thickness direction (hereinafter also referred to as a section G), the striped pattern of the metallic fibrous structure is hardly seen, and generally, a cross-section perpendicular to the fiber length of fibrous structure is seen. Almost the whole circumference of the outer peripheral region of the section G usually corresponds to the second portion of the section C. That is, almost the whole circumference of the outer peripheral region of the section G is made of a fibrous structure extending in the second direction.

In general, the corrosion of the current collector proceeds preferentially in the cross-section perpendicular to the fiber length of the fibrous structure exposed to the outer surface. On the outer surface of the first portion of the outer peripheral region, the fibrous metallic structure extends in the surface direction of the inner rib. That is, the crystal grain boundary extends longer in the surface direction of the inner rib than in the depth direction of the inner rib. Therefore, a corrosion layer formed in the first portion of the outer peripheral region is formed along the surface direction of the inner rib and is hardly formed to a deep position inside the inner rib. The corrosion layer formed along the outer surface of the first portion of the outer peripheral region has a low bonding strength with the current collector (inner rib). Thus, when gas is generated at the interface between the current collector (the outer surface of the first portion of the outer peripheral region) and the corrosion layer, the corrosion layer is relatively easily peeled off from the current collector. On the other hand, on the outer surface of the second portion of the outer peripheral region, the fibrous metallic structure extends in the depth direction of the inner rib. In other words, the grain boundary extends longer in the depth direction of the inner rib than in the surface direction of the inner rib. Hence the corrosion layer formed along the outer surface of the second portion of the outer peripheral region has a high bonding strength with the current collector (inner rib). Even when gas is generated at the interface between the current collector (the second portion of the outer peripheral region) and the corrosion layer, the corrosion layer is hardly peeled off from the current collector, and stress is applied to the inner rib to deform the inner rib. That is, in the second portion of the outer peripheral region in which the fibrous metallic structure extends in the depth direction of the inner rib, the corrosion layer is less likely to be peeled off than in the first portion in which the fibrous metallic structure extends in the surface direction of the inner rib, and stress is more likely to be received from the corrosion layer, which causes the deformation of the current collector. In particular, when the lead-acid battery is used in a condition where the amount of charge is larger than the amount of discharge, the effect of the stress applied to the second portion from the corrosion layer tends to become apparent. Therefore, even when the amount of corrosion is the same, the elongation and distortion of the current collector are reduced more as the first-portion rate is larger.

On the other hand, when the percentage R2 of the second portion is less than 50%, the formation of the deep corrosion layer can be prevented, so that the occurrence of the elongation and distortion of the current collector can be reduced. However, since the proportion of the first portion where the shallow corrosion layer is formed relatively increases, the adhesion between the current collector and the positive electrode material (initial adhesion) easily decreases. Further, when charge and discharge are repeated, the adhesion between the current collector and the positive electrode material further decreases due to a change in volume accompanying the expansion and contraction of the positive active material. In particular, in the deep cycles, the deep discharge and charge are repeated, so that the change in the volume of the positive active material becomes large, and the decrease in adhesion is likely to become remarkable. Due to the decrease in adhesion, insulating lead sulfate is easily accumulated in the gap formed in the positive electrode plate, causing a premature capacity loss (PCL) phenomenon in which the life is reached in a small number of cycles, with the lead sulfate as a resistance. In addition, when the positive electrode material is peeled off due to the decrease in adhesion, the reaction concentrates on the non-peeled positive electrode material to cause softening, which may result in reaching the life.

In the above aspect of the present invention, by setting the percentage R2 of the second portion to less than 50%, it is possible to prevent the elongation and distortion of the current collector from increasing even in the deep cycles. With Sn and/or Sb being contained in the positive electrode material, a conductive path can be ensured between the positive electrode material and the current collector. Although the details are being verified, it is considered that the vicinity of a position where Sb exists in the electrode material hardly contributes to the discharge reaction and consequently functions as a conductive path, while Sn acts as a conductive material in the electrode material. Therefore, by setting the percentage R2 to less than 50%, it becomes difficult to ensure the adhesion between the positive electrode material and the current collector, but the chemical conversion of lead sulfate into lead dioxide can be promoted by the conductive path described above, so that the accumulation of lead sulfate in the gap in the positive electrode plate is prevented. Hence it is possible to prevent the occurrence of the PCL phenomenon even when the deep cycle is repeated. Since the decrease in conductivity in the positive electrode plate can be prevented, the softening of the positive electrode material can be prevented even when the deep cycle is repeated. It is thus possible to ensure high life performance in the deep cycles. Further, in the deep cycles, the amount of charge relative to the amount of discharge is large, and gas is easily generated, but by setting the content of Sn and/or Sb in the above range, it is possible to prevent the gas from being generated and to prevent an increase in the amount of liquid reduction. Therefore, reaching the life due to liquid reduction is prevented, and it can thus be said from this viewpoint that the life characteristics in the deep cycles can be improved.

In the first portion in the section C, the corrosion of the longitudinal rib easily proceeds shallow, and the elongation and distortion of the current collector due to the shallow corrosion are small. On the other hand, in the second portion in the section C, the corrosion of the longitudinal rib easily proceeds deep in a wedge shape, and the elongation and distortion of the current collector due to the deep corrosion tend to increase. Here, in the longitudinal rib, the percentage R2 of the second portion can be controlled intentionally. Even when the percentage of the second portion is originally high in the longitudinal rib, it is also possible to deform the longitudinal rib so as to crush the second portion. For example, when the longitudinal rib is to be deformed by pressing, the percentage R2 can be arbitrarily controlled by the speed of a press, the pressure of the press, the shape of the die, or the like. That is, deforming the longitudinal rib by pressing is not a sufficient condition for decreasing the percentage R2, and it is necessary to appropriately control the pressing condition. When the percentage R2 is small, it is possible to reduce the elongation and distortion of the current collector and to prevent the physical separation of the positive electrode material from the current collector. The present invention has been completed on the basis of these new findings.

The percentage R2 of the second portion is less than 50%, preferably 40% or less, and may be 30% or less. The percentage R2 is preferably 20% or more, more preferably 30% or more. These upper and lower limits can be combined arbitrarily. The content c1 of Sn is preferably 0.01% by mass or more and 0.5% by mass or less, and the content c2 of Sb is preferably 0.01% by mass or more and 0.3% by mass or less. The total c3 of c1 and c2 is preferably 0.01% by mass or more, more preferably 0.7% by mass or less. When the percentage R2 and the contents c1, c2, and/or c3 are in such ranges, the effect of preventing the occurrence of the PCL phenomenon and the liquid reduction is enhanced in the deep cycles, and the softening of the positive electrode material can be further prevented. Therefore, higher life performance can be ensured in the deep cycles.

Note that the content c1 of Sn is an Sn content in terms of Sn elements in the chemically converted positive electrode material. Similarly, the content c2 of Sb is an Sb content in terms of Sb elements in the chemically converted positive electrode material.

The life performance in the deep cycles refers to life performance when the rated capacity (five-hour-rate capacity) is 100%, and the cycle of discharge and charge is repeated in a region where the depth of one-time discharge is 20% or more (also referred to as a heavy-loading region).

As described above, with Sn functioning as a conductive material in the positive electrode material, the positive electrode material preferably contains at least Sn.

The density of the positive electrode material is preferably not less than 3.4 g/cm³ and not more than 4.8 g/cm³ (preferably 4.6 g/cm³ or less). When the density is in such a range, the elongation and distortion of the current collector are easily reduced by the action due to the percentage R2, the durability of the electrode material is easily ensured to some extent, and the effect of improving the conductivity by Sn and/or Sb is easily exhibited. Therefore, when the density is such a density, it is advantageous in ensuring higher lifetime performance.

The density of the positive electrode material means the value of the bulk density of the positive electrode material in a fully charged state and is measured as follows. The battery after chemically converted or in use (preferably at the initial stage of use) is fully charged and then disassembled, and the obtained positive electrode plate is washed with water and dried to remove an electrolyte solution in the positive electrode plate. (The washing with water is performed until it is confirmed that the color of the pH test paper does not change by pressing the pH test paper against the surface of the electrode plate washed with water. However, the washing with water is performed within two hours. The positive electrode plate washed with water is dried at 60°C ± 5°C for about 6 hours. When the sticking member is included in the electrode plate after drying, the sticking member is removed from the electrode plate by peeling.) The battery in the initial stage of use refers to a battery that has not been used for a long time and has hardly been degraded. Subsequently, the positive electrode material is separated from the positive electrode plate to obtain an uncrushed measurement sample. A sample is charged into a measurement case and evacuated, which is then filled with mercury at a pressure of 0.5 psia to 0.55 psia (≈ 3.45 kPa or more and 3.79 kPa or less) to measure the bulk volume of the positive electrode material, and the mass of the measurement sample is divided by the bulk volume to determine the bulk density of the positive electrode material. A volume obtained by subtracting the injection volume of mercury from the volume of the measurement case is defined as the bulk volume.

The density of the positive electrode material can be measured using an automatic porosimeter (Auto Pore IV 9505) manufactured by Shimadzu Corporation.

In the present specification, in the case of a flooded-type battery, the fully charged state of the lead-acid battery is a state where in a water bath at 25°C ± 2°C, constant current charge is performed at a current (A) 0.2 times a numerical value indicated as a rated capacity (Ah) until 2.5 V/cell is reached, and thereafter, constant current charge is performed at a current (A) 0.2 times the numerical value indicated as the rated capacity (Ah) for two hours. In the case of a valve regulated battery, the fully charged state of the lead-acid battery is a state where a constant current constant voltage charge of 2.23 V/cell is performed in an air bath at 25°C ± 2°C at a current 0.2 times a numerical value indicated as the rated capacity (Ah), and charge is completed when the charge current at the constant voltage charge becomes 0.005 times the numerical value indicated as the rated capacity (Ah). Note that the numerical value indicated as the rated capacity is a numerical value in units of Ah. The unit of the current which is set based on the numerical value indicated as the rated capacity is A.

Note that the full charge of the lead-acid battery may only be performed after chemical conversion, for example, immediately after chemical conversion, or may be performed after a lapse of time from chemical conversion (e.g., a lead-acid battery in use (preferably at the initial stage of use) after chemical conversion may be fully charged).

The shape of the section C of the longitudinal rib is not particularly limited but is preferably octagonal. When the section C is an octagon, the inner angle of the apex does not become excessively small, and the effect of preventing corrosion near the apex is easily enhanced. In order to form a longitudinal rib having an octagonal section C, for example, a longitudinal rib having a rectangular section C may only be deformed. The method for deforming the longitudinal rib is not particularly limited, but for example, the inner rib of the current collector may only be pressed. In this case, the pressing conditions of the inner rib may only be appropriately selected so that the percentage R2 of the second portion is within a predetermined range. By forming the section C in an octagonal shape, the percentage R2 can be easily controlled to be less than 50%. The octagonal shape need not be a strictly octagonal shape in the mathematical sense, and the apex may be slightly rounded, or each side may be bent slightly.

The above aspect of the present invention is useful when a punched current collector is used as the current collector of the positive electrode, as described above. The punched current collector is preferably a current collector punched out of a stretched sheet of lead or a lead alloy. Since the stretched sheet easily generates a striped pattern of a metallic fibrous structure, the percentage of the second portion can be easily adjusted.

In the first portion, that the fibrous structure (the direction of the stripes) extends along the contour of the outer peripheral region of the section C refers to a state described below. First, the inside of the frame rib of the current collector is cut into three equal sections: an upper region on the upper element side of the frame rib; a lower region on the lower element side of the frame rib; and a middle region between the upper region and the lower region. At this time, in a plurality of longitudinal ribs, four rows of the sections C perpendicular to the first direction (parallel to the upper element and parallel to the thickness direction) are formed. That is, one row of the sections C is formed in each of the upper region and the lower region, and two rows of the sections C are formed in the middle region. When the trisection dividing line corresponds to the intersection (node) of the longitudinal and transverse ribs, the current collector may be divided into three sections with the dividing line slightly shifted in whole or in part so that the section C is formed in the longitudinal rib portion between the intersections as much as possible. When the inside of the frame rib of the current collector is divided into three sections, the dimension of the lug or foot is not considered.

Next, from any two rows out of the four rows, a plurality of sections C to be observed (at least 60% or more of the sections C included in the two rows) are selected A portion of the outer peripheral region of the selected section C, in which the stripes of the fibrous structure have an angle of less than 45° with the contour of the section C with reference to the horizontal plane in the first direction from the side element, is the first portion. A portion except for the first portion is the second portion. Specifically, at an arbitrary point P on the contour of each section C, a tangent S1 of the point P is drawn, and a perpendicular L of the tangent S1 is drawn so as to pass through the point P. Next, a tangent S2 of a stripe existing at a depth of 55 pm from the point P on the perpendicular L and intersecting the perpendicular L is drawn at the intersection. When an angle θ between the tangent S2 and the tangent S1 is less than 45°, the point P constitutes the contour corresponding to the first portion. When the angle θ is 45° or more, the point P constitutes the contour corresponding to the second portion. Even when it cannot be determined whether or not the point P constitutes the contour corresponding to the first portion because the fibrous structure cannot be observed, the point P constitutes the contour corresponding to the second portion. In all the selected sections C, the percentage of the length of the contour corresponding to the second portion to the total length of the contour of the section C is determined and averaged to calculate the percentage R2.

When the cut portion is the intersection of the longitudinal rib and the transverse rib (node), the average may be obtained excluding the cross-section, and the cut position of the longitudinal rib may be shifted so as to be off the node.

At the time of forming the section C, the prepared current collector is embedded in a thermosetting resin so as to cover the whole of the prepared current collector to cure the resin, and thereafter, the current collector is cut. As the current collector, a current collector before being filled with the positive electrode material may be used, or a current collector, obtained by dissembling a lead-acid battery in a fully charged state and taking the current collector out of the lead-acid battery, may be used. In the latter case, first, the electrode plate taken out after the battery is dissembled is washed with water to remove an electrolyte solution containing sulfuric acid and is then dried. Thereafter, the positive electrode material is removed from the positive electrode plate, and the positive electrode material adhering to the surface of the current collector is removed by mannitol. The state of the metallic structure in the section C is photographed and observed with a microscope after etching is performed on the cross-section of the current collector.

The mass of the positive electrode material is the mass of the positive electrode material taken out of the lead-acid battery in the fully charged state when the positive electrode material is washed with water and dried, and the content c1 of Sn and the content c2 of Sb in the positive electrode material are the mass percentage of Sn and the mass percentage of Sb, respectively. Although it is considered that each of Sn and Sb exists in the form of a compound (e.g., an oxide or a sulfuric acid compound), in this case, the Sn content and the Sb content are calculated in consideration of only the mass of Sn and the mass of Sb in the compound. The Sn content and the Sb content in the positive and negative electrode materials are determined in the following manner: after a lead-acid battery in a fully charged state is dissembled, and the removed electrode plate is washed with water and dried, the electrode material is collected, a ground sample is dissolved in concentrated nitric acid, and inductively coupled plasma (ICP) emission analysis is performed.

In the section C, the thickness (i.e., the thickness of the fibrous structure) of the first portion may only be 55 pm or more. Even if the outer peripheral region appears as the first portion at a glance, when the thickness of the region where the striped pattern of the fibrous structure is observed is less than 55 µm, the outer peripheral region is regarded as the second portion, not the first portion. The first portion having a thickness of 55 pm or more has a sufficient action to prevent the penetration of corrosion to the inside of the inner rib. In this case, the penetration of corrosion to the inside is likely to become highly uniform throughout the inner ribs. Hence the elongation and distortion of the current collector are reduced remarkably. From the viewpoint of further preventing the corrosion of the longitudinal rib from penetrating to the inside, the thickness of the first portion is preferably 100 pm or more.

The thickness of the first portion in the section C may only be measured as follows. First, a tangent S1 is drawn at an arbitrary point P1 on the contour of the first portion, and a perpendicular L of the tangent S1 is drawn so as to pass through the point P1. Next, at a point Px moving from the point P1 to a depth of X pm on the perpendicular L, a tangent S2 of a stripe intersecting the perpendicular L is continuously drawn. At this time, when the angle between the tangent S 1 and the tangent S2 is continuously 45° or less, it can be said that the thickness of the first portion immediately below the point P1 is X pm or more.

The thickness of the inner rib may only be, for example, from 0.7 mm to 3 mm. The rib width of the inner rib may only be, for example, from 0.7 mm to 3 mm.

When the current collector is a current collector punched out of a stretched sheet of lead or a lead alloy, a total length WLW of the inner dimensions of the transverse rib and a total length WLH of the inner dimensions of the longitudinal rib may satisfy WLH/LW ≥ 0.8 and may satisfy WLH/WLW ≥ 1.3. In this case, the corrosion of the current collector tends to penetrate to the inside, and hence the elongation and distortion of the current collector are reduced more remarkably by controlling the percentage R2 to be less than 50%. Here, the inner dimension length of each inner rib means the length in the inner dimension of the grid square, that is, the length (bar length) of the side of a rectangular space defining the grid square. Note that the direction of the length WLW (a direction in which the transverse rib elongates) usually corresponds to the stretching direction of the stretched sheet (machine direction (MD)).

The above current collector remarkably exerts the effect described above by being applied to the positive electrode plate, but the present invention is not limited to this case, and the above current collector may be applied to the negative electrode plate. The current collector is preferably used at least for the positive electrode plate. When the lead-acid battery is provided with a plurality of positive electrode plates, the above current collector may be used for some of the positive electrode plates, and the above current collector may be used for all of the positive electrode plates. Similarly, when the lead-acid battery includes a plurality of negative electrode plates, the above current collector may be used for at least some of the negative electrode plates, and the above current collector may be used for all of the negative electrode plates.

A method for manufacturing a lead-acid battery according to the above aspect of the present invention includes, for example, the steps of preparing the current collector, and obtaining the positive electrode plate that includes the current collector and the positive electrode material. The current collector can be obtained by a preparation process including pressing an intermediate rib which is a precursor of the inner rib as described above. The preparation step of the current collector includes, for example, (i) a step of preparing a rolled plate, (ii) a step of punching the rolled plate to form an intermediate grid body having a plurality of intermediate ribs formed in a grid shape, and (iii) a step of pressing the intermediate grid body from a thickness direction of the intermediate grid body to form at least some of the inner ribs. The pressing includes, for example, deforming at least some of the plurality of intermediate ribs so that at least one end in a rib width direction intersecting an extending direction of each of the intermediate ribs is thinner than a center in the rib width direction and that the percentage R2 is less than 50%.

The lead-acid battery according to the embodiment of the present invention will be described for each of the main constituent elements with reference to the drawings, but the present invention is not limited to the following embodiment.

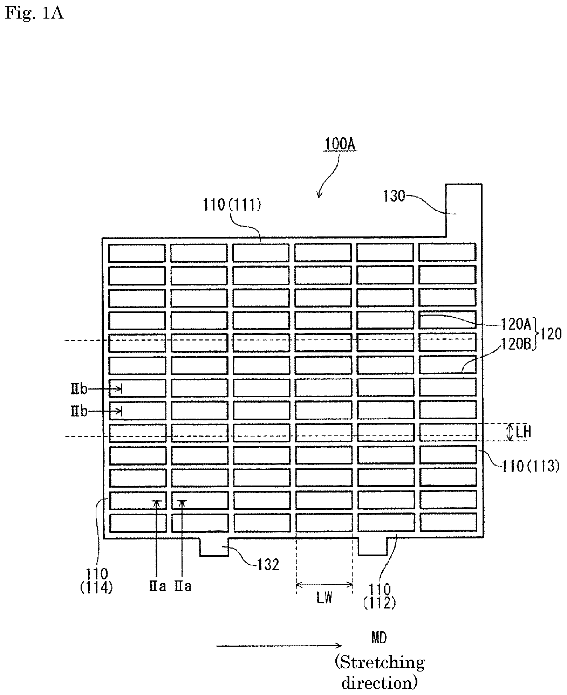

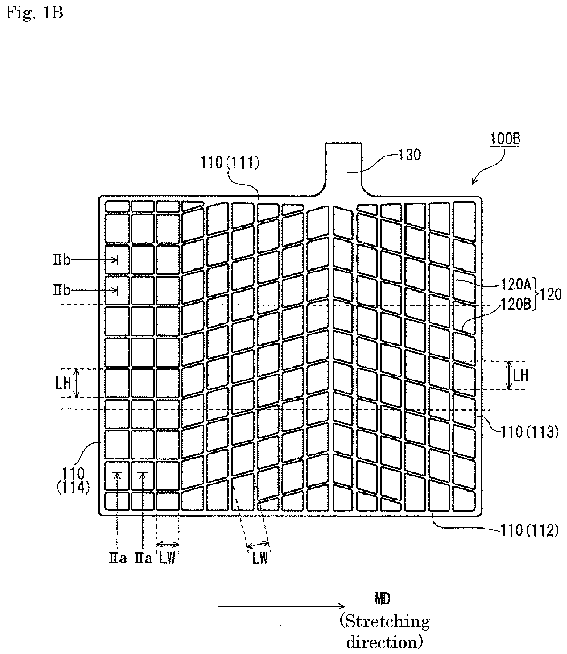

Figs. 1A and 1B are plan views showing the appearance of current collectors 100A and 100B constituting a positive electrode plate in a lead-acid battery according to one embodiment and another embodiment of the present invention, respectively. Each of the current collectors 100A and 100B has a frame rib 110 and inner ribs 120 inside the frame rib 110. The frame rib 110 includes an upper element 111 continuous with the lug 130, a lower element 112 facing the upper element 111 and continuous with a lower protrusion (also referred to as a foot) 132, and a pair of side elements 113 and 114 coupling the upper element 111 with the lower element 112. Dashed lines indicate the boundaries that divide the inner ribs into three equal sections: upper, middle, and lower regions. The current collector 100A of Fig. 1A has a lower protrusion (also referred to as a foot) 132 continuous with the lower element 112. In the current collector 100B of Fig. 1B, the transverse rib extends obliquely with respect to the upper or lower element. LH indicates the inner dimension length per grid of the longitudinal rib, and LW indicates the inner dimension length per grid of the transverse rib.

The current collectors 100A and 100B are, for example, grid bodies punched out of stretched sheets of lead or a lead alloy, and the stretching direction is a direction indicated by an arrow MD in Fig. 1. A section C of a longitudinal rib 120A is a cross-section at line IIa-IIa in Fig. 1, and a section G of a transverse rib 120B is a cross-section at line IIb-IIb. The metallic structure of the stretched sheet easily forms a fibrous structure extending in the stretching direction. Hence, a striped pattern of the structure as thus described is generated in the section C. On the other hand, in the section G, a pattern due to the cutting of a fibrous structure can be generated.

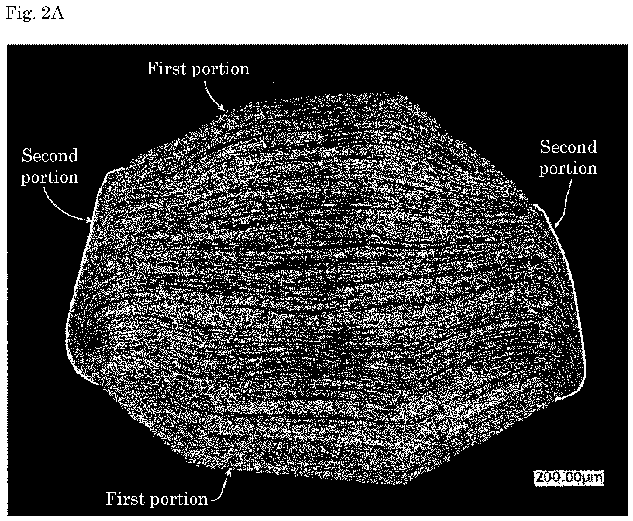

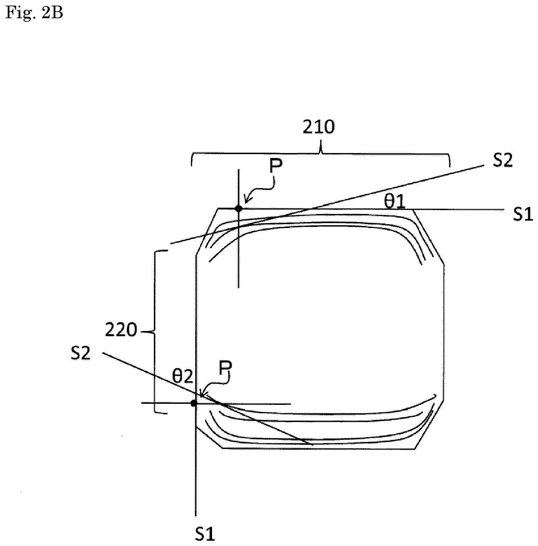

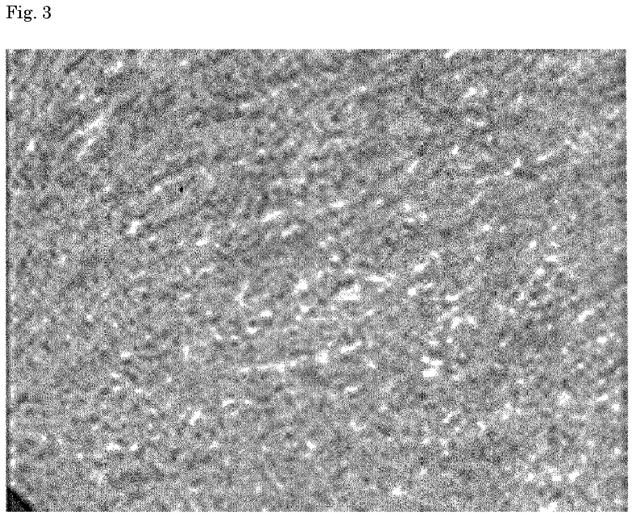

Fig. 2A is an example of a photograph of the section C of the longitudinal rib 120A, and the cross-section has an octagonal shape and shows the striped pattern of the metallic fibrous structure. Fig. 2B is a conceptual view of an example of an octagonal section C imitating Fig. 2A. On the other hand, Fig. 3 is an example of a photograph of the section G of the transverse rib 120B, and the cross-section has a pattern formed by a cross-section perpendicular to the fiber length of the metallic fibrous structure. In Fig. 2B, most of the left and right sides of the octagonal section C are a second portion 220, and the other outer peripheral region is a first portion 210. In the first portion 210, the stripe (tangent S2) of the fibrous structure has an angle θ1 of less than 45° with the contour (line S1) of the section C. On the other hand, in the second portion 220, no stripe of the fibrous structure can be confirmed, or the stripe (tangent S2) has an angle θ2 exceeding 45° with the contour (line S1) of the section C. In Fig. 2A, there is a region in the outermost layer of the second portion 220 where a striped pattern of a fibrous structure having a thickness of less than about 55 pm is observed, but such a thin portion does not constitute the first portion 210.

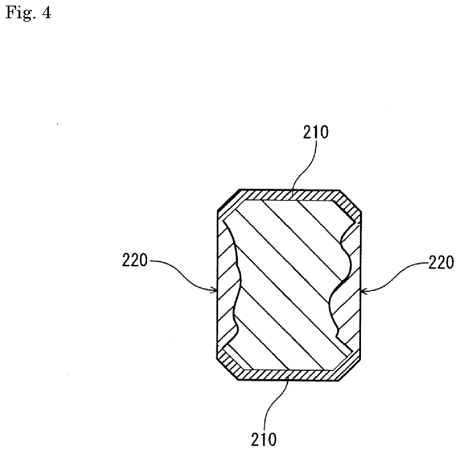

Fig. 4 is a conceptual view of the section C showing the progress of corrosion of the inner rib. A portion where the shallow corrosion layer has been formed is the first portion where the fibrous structure extends along the contour of the section C, and even when corrosion proceeds, the corrosion layer is hardly formed deep. However, due to the formation of the fibrous structure, peeling tends to occur near the interface between the current collector and the electrode material. It is thus considered that the stress of the current collector trying to deform is easily relaxed. On the other hand, a portion where a wedge-shaped deep corrosion layer has been formed is the second portion. When a deep corrosion layer is formed, nonuniform deformation of the current collector easily occurs, the current collector elongates, and the electrode material easily falls off.

### (Positive electrode plate)

The positive electrode plate of the lead-acid battery includes the current collector described above and a positive electrode material held by the current collector (positive current collector). As the positive electrode plate, what is called a paste type positive electrode plate is used. Note that the positive electrode material is obtained by removing the positive current collector from the positive electrode plate. A member such as a mat or a pasting paper may be stuck to the positive electrode plate. Such a member (sticking member) is used integrally with the positive electrode plate and is thus included in the positive electrode plate. When the positive electrode plate includes such a member, the positive electrode material excludes the positive current collector and the sticking member. However, when a sticking member such as a mat is pasted to the separator, the thickness of the sticking member is included in the thickness of the separator.

As described above, the positive current collector is preferably a punched current collector. As described above, the current collector has a frame rib, a lug provided on the frame rib, and inner ribs inside the frame rib. The current collector is preferably a grid-shaped current collector (positive electrode grid). In the positive electrode grid, the inner rib portion is in a grid shape (including a net shape). The use of the positive electrode grid can facilitate the positive electrode material to be carried. The frame rib is preferably rectangular. Note that the rectangle need not be strictly rectangular, and the apex may be slightly rounded, or each side may be bent slightly.

The positive current collector can be formed by press-punching a sheet of lead or a lead alloy. The sheet is preferably a stretched sheet (also referred to as a rolled plate) subjected to stretching. The stretched sheet may be a uniaxially stretched sheet or a biaxially stretched sheet.

The current collector can be manufactured by a manufacturing method including pressing an intermediate rib which is a precursor of the inner rib. Such a manufacturing method includes, for example, (i) a step of preparing a rolled plate, (ii) a step of punching the rolled plate to form an intermediate grid body having a plurality of intermediate ribs formed in a grid shape, and (iii) a step of pressing the intermediate grid body from a thickness direction of the intermediate grid body to form at least some of the inner ribs. Here, the pressing includes deforming at least some of the plurality of intermediate ribs so that at least one end in a rib width direction intersecting with (e.g., orthogonal to) the extending direction of each of the intermediate ribs is thinner than a center in the rib width direction.

As a lead alloy used for the positive current collector, a Pb-Ca alloy, a Pb-Ca-Sn alloy, or a Pb-Sn alloy are preferred in terms of corrosion resistance and mechanical strength. As the positive current collector, lead having a purity of three nines or higher (purity of 99.9% by mass or more) may be used. The positive current collector may have lead alloy layers having different compositions, and a plurality of alloy layers may be used.

The percentage R2 of the second portion (specifically, the second contour part) may only be less than 50% and may preferably be not more than 40%. The lower limit of the percentage R2 is not particularly limited but is preferably 20% or more and may be 30% or more from the viewpoint of easily ensuring the adhesion between the initial positive electrode material and the current collector. These upper and lower limits can be combined arbitrarily.

The positive electrode material contains a positive active material (lead dioxide or lead sulfate) that develops a capacity through an oxidation-reduction reaction. The positive electrode material contains at least one selected from the group consisting of Sn and Sb. Sn and Sb are usually included as additives. The positive electrode material may contain, when required, an additive except for the additives containing Sn and/or Sn

Examples of the additive containing Sn include metal tin (Sn), Sn alloys, oxides (tin(II) oxide, tin(IV) oxide, tin(VI) oxide, etc.), and tin sulfate (SnSO₄). Examples of the additive containing Sb include as metal antimony (Sb), Sb alloys, antimony oxides such as antimony trioxide (Sb₂O₃), antimony tetroxide, and antimony pentoxide, and antimony sulfate (Sb₂(SO₄)₃). An alloy of Pb and Sn, an alloy of Pb and Sb, or an alloy of Pb, Sn, and Sb may be mixed with the metal Pb of the lead powder raw material.

The content c1 of Sn in the positive electrode material may only be less than 0.75% by mass, and may preferably be 0.6% by mass or less, and more preferably 0.5% by mass or less. The content c2 of Sb in the positive electrode material may only be less than 0.50% by mass, and may preferably be not more than 0.4% by mass, and more preferably not more than 0.3% by mass. The total c3 of c1 and c2 may only be less than 0.8% by mass and may preferably be not more than 0.7% by mass. When the contents c1, c2, and/or c3 are in such ranges, in the deep cycles, the effect of preventing the occurrence of the PCL phenomenon and the increase in the liquid reduction is enhanced, and the softening of the positive electrode material can be further prevented. Therefore, higher life performance can be ensured in the deep cycles. c1 is preferably 0.01% by mass or more. c2 is preferably 0.01% by mass or more. c3 is preferably 0.01% by mass or more and may be 0.02% by mass or more. When the contents c1, c2, and/or c3 are in such ranges, in the deep cycles, the effect of preventing the occurrence of the PCL phenomenon is enhanced, and the softening of the positive electrode material can be further prevented. For c3, the upper limit value and the lower limit value described above can be combined arbitrarily.

A non-chemically converted positive electrode plate is obtained in such a manner that a positive current collector is filled with a positive electrode paste, which is then cured and dried. Thereafter, the non-chemically converted positive electrode plate is converted chemically. The positive electrode paste is prepared by kneading a lead powder, an additive, water, sulfuric acid, and the like.

### (Negative electrode plate)

The negative electrode plate of the lead-acid battery is made up of a current collector and a negative electrode material. The negative electrode material is obtained by removing the negative current collector from the negative electrode plate. Note that a member such as a mat or a pasting paper may be stuck to the negative electrode plate. Such a member (sticking member) is used integrally with the negative electrode plate and is thus included in the negative electrode plate. When the negative electrode plate includes such a member, the negative electrode material excludes the negative current collector and the sticking member.

The negative current collector may be formed by casting lead (Pb) or a lead alloy or may be formed by processing a lead or a lead alloy sheet. Examples of the processing method include expanding and punching. The use of a grid-shaped current collector (negative electrode grid) as the negative current collector is preferred because the negative electrode material is easily carried. As the negative current collector, a current collector as described for the positive current collector may be used.

The lead alloy used for the negative current collector may be either a Pb-Ca alloy or a Pb-Ca-Sn alloy. The lead or lead alloys may further contain, as an additive element, at least one selected from the group consisting of Ba, Ag, Al, Bi, As, Se, Cu, and the like.

The negative electrode material contains, as an essential component, a negative active material (lead or lead sulfate), which exhibits a capacity by an oxidation-reduction reaction, and can contain an organic expander, a carbonaceous material, and an additive such as barium sulfate. The negative active material in a charged state is spongy lead, but a non-chemically converted negative electrode plate is usually prepared using a lead powder.

At least one kind selected from the group consisting of lignins and/or synthetic organic expanders may be used as the organic expander. Examples of the lignins include lignin and lignin derivatives. Examples of the lignin derivative include lignin sulfonic acid or its salt (alkali metal salt such as sodium salt). The organic expander is an organic polymer containing a sulfur element and generally contains a plurality of aromatic rings in the molecule and the sulfur element as a sulfur-containing group. Among the sulfur-containing groups, a sulfonic acid group or a sulfonyl group, which is a stable form, is preferred. The sulfonic acid group may be present in an acid form or in a salt form like a Na salt.

As a specific example of the organic expander, a condensate obtained using an aldehyde compound (aldehyde or its condensate such as formaldehyde), which is a compound having a sulfur-containing group and an aromatic ring, is preferable. Examples of the aromatic ring include a benzene ring and a naphthalene ring. When the compound having an aromatic ring has a plurality of aromatic rings, the plurality of aromatic rings may be coupled by direct bonding or a coupling group (e.g., alkylene group, sulfone group, etc.). Examples of such a structure include biphenyl, bisphenylalkane, and bisphenylsulfone. Examples of the compound having an aromatic ring include a compound having the aromatic ring described above and a hydroxy group and/or an amino group. The hydroxy group and the amino group may be directly bonded to the aromatic ring or may be bonded as an alkyl chain having the hydroxy group or the amino group. The compound having an aromatic ring is preferably a bisphenol compound, a hydroxybiphenyl compound, a hydroxynaphthalene compound, a phenol compound, or the like. The compound having an aromatic ring may further have a substituent. The organic expander may contain one kind of residues of these compounds or may contain a plurality of kinds thereof. The bisphenol compound is preferably bisphenol A, bisphenol S, bisphenol F, or the like.

The sulfur-containing group may be directly bonded to the aromatic ring contained in the compound and may, for example, be bonded to the aromatic ring as an alkyl chain having the sulfur-containing group.

Further, for example, a condensate obtained using an aldehyde compound of the compound having the aromatic ring described above and a monocyclic aromatic compound (aminobenzenesulfonic acid, alkylaminobenzenesulfonic acid, phenolsulfonic acid, or its substituent) may be used as the organic expander.

The content of the organic expander contained in the negative electrode material is, for example, preferably 0.01% by mass or more, more preferably 0.02% by mass or more, and still more preferably 0.05% by mass or more. On the other hand, the content is preferably 1.0% by mass or less, more preferably 0.8% by mass or less, and still more preferably 0.5% by mass or less. These lower and upper limits can be combined arbitrarily. Here, the content of the organic expander contained in the negative electrode material is a content in the negative electrode material collected from a chemically converted lead-acid battery in a fully charged state by a method to be described later.

As the carbonaceous material contained in the negative electrode material, carbon black, graphite, hard carbon, soft carbon, and the like can be used. Examples of the carbon black include acetylene black, furnace black, and lamp black. Furnace black also includes ketjen black (product name). The graphite may be a carbon material including a graphite-type crystal structure and may be either artificial graphite or natural graphite.

The content of the carbonaceous material in the negative electrode material is, for example, preferably 0.05% by mass or more, and more preferably 0.2% by mass or more. On the other hand, the content is preferably 4.0% by mass or less, more preferably 3% by mass or less, and still more preferably 2% by mass or less. These lower and upper limits can be combined arbitrarily.

The content of barium sulfate in the negative electrode material is, for example, preferably 0.5% by mass or more, more preferably 1% by mass or more, and still more preferably 1.3% by mass or more. On the other hand, the content is preferably 3.0% by mass or less, more preferably 2.5% by mass or less, and still more preferably 2% by mass or less. These lower and upper limits can be combined arbitrarily.

Hereinafter, a method for quantifying the amounts of the organic expander, the carbonaceous material, and the barium sulfate contained in the negative electrode material will be described. Prior to quantitative analysis, a chemically converted lead-acid battery is fully charged and disassembled to obtain a negative electrode plate to be analyzed. The obtained negative electrode plate is washed with water and dried to remove the electrolyte solution in the negative electrode plate. (The washing with water is performed until it is confirmed that the color of the pH test paper does not change by pressing the pH test paper against the surface of the negative electrode plate washed with water. However, the washing with water is performed within two hours. The negative electrode plate washed with water is dried at 60°C ± 5°C in a reduced pressure environment for about six hours. When the sticking member is included in the negative electrode plate after drying, the sticking member is removed from the negative electrode plate by peeling). Next, the negative electrode material is separated from the negative electrode plate to obtain an uncrushed sample S.

### (Organic expander)

The uncrushed sample S is crushed, and the crushed sample S is immersed in a 1 mol/L NaOH aqueous solution to extract the organic expander. An insoluble component is removed from a NaOH aqueous solution containing the extracted organic expander by filtration. The obtained filtrate (hereinafter also referred to as a filtrate to be analyzed) is desalted, concentrated, and dried to obtain a powder of the organic expander (hereinafter also referred to as a powder to be analyzed). Desalting may be performed by immersing the filtrate in distilled water in a dialysis tube.

The organic expander is specified by obtaining information from an infrared spectral spectrum of the powder to be analyzed, an ultraviolet-visible absorption spectrum of a solution obtained by dissolving the powder to be analyzed in distilled water or the like, a nuclear magnetic resonance (NMR) spectrum of a solution obtained by dissolving the powder to be analyzed in a solvent such as heavy water, a pyrolysis gas chromatography-mass spectrometry (GC-MS) capable of obtaining information on individual compounds constituting the substance, or the like.

The ultraviolet-visible absorption spectrum of the filtrate to be analyzed is measured. The content of the organic expander in the negative electrode material is quantified using a spectral intensity and a calibration curve prepared in advance. When the structural formula of the organic expander to be analyzed cannot be exactly specified, and the calibration curve of the same organic expander cannot be used, the calibration curve is prepared using an available organic expander exhibiting an ultraviolet-visible absorption spectrum, an infrared spectral spectrum, an NMR spectrum, and the like similar to those of the organic expander to be analyzed.

### [Carbonaceous material and barium sulfate]

The uncrushed sample S is crushed, 50 ml of nitric acid having a concentration of 20% by mass is added to 10 g of the crushed sample S, and the mixture is heated for about 20 minutes to dissolve a lead component as lead nitrate. Next, a solution containing lead nitrate is filtered, and solids such as carbonaceous materials and barium sulfate are filtered off.

The obtained solid is dispersed in water to form a dispersion, and then components except for the carbonaceous material and barium sulfate (e.g., reinforcing material) are removed from the dispersion by using a sieve. Next, the dispersion is subjected to suction filtration using a membrane filter with its mass measured in advance, and the membrane filter is dried with the filtered sample in a dryer at 110°C ± 5°C. The filtered sample is a mixed sample of a carbonaceous material and barium sulfate. A mass (A) of the mixed sample is measured by subtracting the mass of the membrane filter from the total mass of the dried mixed sample and the membrane filter. Thereafter, the dried mixed sample is placed in a crucible together with the membrane filter, and the crucible is heated to a temperature of 700°C or higher. The remaining residue is barium oxide. A mass (B) of barium sulfate is determined by converting the mass of barium oxide to the mass of barium sulfate. The mass of the carbonaceous material is calculated by subtracting the mass B from the mass A.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to a lead powder and various additives and kneading them. In the curing process, it is preferable to cure the non-chemically converted negative electrode plate at room temperature or at a higher temperature and humidity.

The chemical conversion can be performed by charging the electrode plate group in a state where the electrode plate group including a non-chemically converted negative electrode plate is immersed in an electrolyte solution containing sulfuric acid in a container of a lead-acid battery. However, the chemical conversion may be performed before the lead-acid battery or the electrode plate group is assembled. The chemical conversion produces spongy lead.

### (Electrolyte solution)

The electrolyte solution is an aqueous solution containing sulfuric acid and may be gelled as necessary. The specific gravity of the electrolyte solution in the lead-acid battery in the fully charged state at 20°C is, for example, 1.20 to 1.35, and preferably 1.25 to 1.32.

### (Separator)

A separator is usually disposed between the negative electrode plate and the positive electrode plate. A nonwoven fabric, a microporous film, or the like is used as the separator. The thickness and the number of separators interposed between the negative electrode plate and the positive electrode plate may be selected in accordance with the distance between the electrodes.

The nonwoven fabric is a mat in which fibers are intertwined without being woven and is mainly made of fibers. In the nonwoven fabric, for example, 60% by mass or more of the nonwoven fabric is formed of fibers. As the fibers, it is possible to use glass fibers, polymer fibers (polyolefin fibers, acrylic fibers, polyester fibers such as polyethylene terephthalate fibers, etc.), pulp fibers, and the like. Among them, glass fibers are preferred. The nonwoven fabric may contain components in addition to the fibers, such as an acid-resistant inorganic powder and a polymer as a binder.

On the other hand, the microporous film is a porous sheet mainly made of components except for fiber components and is obtained by, for example, extrusion molding a composition containing, for example, a pore-forming additive (polymer powder and/or oil, etc.) into a sheet shape and then removing the pore-forming additive to form pores. The microporous film is preferably made of a material having acid resistance and is preferably composed mainly of a polymer component. As the polymer material, a polyolefin such as polyethylene or polypropylene is preferred.

The separator may be, for example, made of only a nonwoven fabric or made of only a microporous film. The separator may be, when required, a laminate of a nonwoven fabric and a microporous film, a laminate of different or the same kind of materials, or a laminate of different or the same kind of materials in which recesses and projections are engaged to each other. The separator may be formed in a bag shape. In this case, the bag-shaped separator may house the positive electrode plate or may house the negative electrode plate.

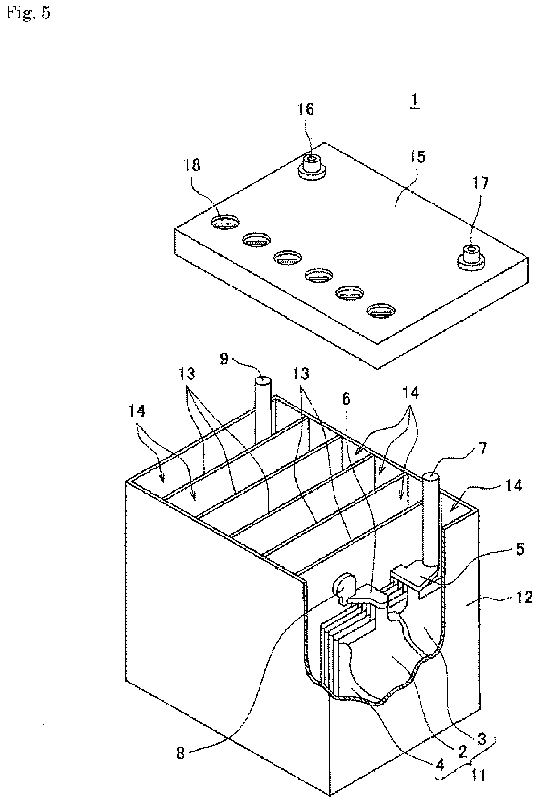

Fig. 5 shows the appearance of an example of the lead-acid battery according to the embodiment of the present invention.

A lead-acid battery 1 includes a container 12 storing an electrode plate group 11 and an electrolyte solution (not shown). The inside of the container 12 is partitioned into a plurality of cell chambers 14 by partitions 13. In each cell chamber 14, one electrode plate group 11 is housed. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed to supply a water addition liquid. The vent plug 18 may have a function of discharging gas generated in the cell chamber 14 to the outside of the battery.

The electrode plate group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, a negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode plate groups 11 of the adjacent cell chambers 14 in series.

Although Fig. 5 shows an example of a flooded-type battery (vented battery), the lead-acid battery may be a valve regulated battery (VRLA type). In the flooded-type battery, the softening/dropping preventing effect of the positive electrode material is more conspicuous than in the valve regulated battery, so that the above aspect of the present invention is particularly suitable for the flooded-type battery.

The life performance in the deep cycles is evaluated as follows.

A heavy-loading test is performed in conformity to Japanese Industrial Standards (JIS) D 5301: 2006 9.5.5 Life test, b) Heavy-loading life test. More specifically, a lead-acid battery in a fully charged state is discharged for one hour with discharge current shown in Table 1, and then charged for five hours with charge current shown in Table 1. This cycle of discharge and charge is defined as one cycle. Note that the discharge current and the discharge current are changed in accordance with the five-hour-rate capacity of the lead-acid battery as shown in Table 1. The following description of the heavy-loading test is an example of a case where a lead-acid battery with a five-hour-rate capacity of 48 Ah (12 V) is used. During the test, the lead-acid battery is placed in a water bath at 40°C ± 2°C. The water surface of the water bath is made to be positioned between 15 mm and 25 mm below the upper surface of the storage battery. When several lead-acid batteries are placed in the water bath, the distance between the adjacent lead-acid batteries and the distance between the lead-acid battery and the adjacent inner wall of the water bath are set to at least 25 mm.

During the test, every 25 cycles, continuous discharge is performed at a discharge current of 20 A until the terminal voltage of the lead-acid battery reaches 10.2 V, and the discharge duration time is recorded. Then, the charge is performed at a charge current of 5 A every 15 minutes until the terminal voltage of the lead-acid battery or the specific gravity of the electrolyte solution (converted value at 25°C) shows a constant value three times consecutively. Note that the discharge and the charge are also added to the number of life cycles.

It is confirmed that the capacity (Ah) determined from the product of the discharge time and discharge current measured in the above test decreases to 50% or less of the rated capacity of 48 Ah and does not rise again, and the test is terminated. The number of times that the capacity becomes 50% of the rated capacity of 48 Ah (number of life cycles) is used as an index of life performance in the deep cycles. The fact that the capacity does not increase again is confirmed based on the fact that after the capacity decreases to 50% of the rated capacity, the battery is charged to the fully charged state, the same discharge as above is performed again, and the capacity determined from the product of the discharge time and the discharge current at this time is 50% or less of the rated capacity. Note that the number of life cycles is determined by approximating the number of cycles when the discharge capacity is 50% of the rated capacity from a graph of a capacity and the number of cycles in which the discharge capacity for every 25 cycles is plotted.

When the amount of electrolyte solution reaches the lower limit line (LL: Lower Line) of the lead-acid battery in the container, the number of cycles at this time is determined as the life due to liquid reduction. In the case of the container having no LL, the number of cycles when the level of the electrolyte solution drops to the upper end of the positive electrode strap (positive electrode shelf) is determined as the life due to liquid reduction.

A lead-acid battery according to one aspect of the present invention is described as follows.
(1) One aspect of the present invention is a lead-acid battery lead-acid battery including: a positive electrode plate; a negative electrode plate; and an electrolyte solution. The positive electrode plate includes a current collector and a positive electrode material held by the current collector. The current collector has a frame rib, a lug provided on the frame rib, and inner ribs inside the frame rib. The frame rib includes an upper element continuous with the lug, a lower element facing the upper element, and a pair of side elements coupling the upper element with the lower element. The inner rib includes a longitudinal rib extending in a first direction from the upper element toward the lower element, and a transverse rib extending in a second direction from one of the side elements toward the other of the side elements. A striped pattern of a metallic fibrous structure is seen in a cross-section perpendicular to the first direction of the longitudinal rib. An outer peripheral region of the cross-section is made up of a first portion in which the fibrous structure extends along a contour of the cross-section and a second portion except for the first portion. A percentage R2 of a length of the contour corresponding to the second portion to a total length of the contour of the cross-section is less than 50%. The positive electrode material includes at least one selected from the group consisting of Sn and Sb. A content c1 of Sn in the positive electrode material is less than 0.75% by mass. A content c2 of Sb in the positive electrode material is less than 0.50% by mass. A total c3 of c1 and c2 is less than 0.8% by mass.
(2) In (1) above, the percentage R2 is preferably 40% or less.
(3) In (1) or (2) above, the percentage R2 is preferably 30% or less.
(4) In any one of (1) to (3) above, the percentage R2 is preferably 20% or more.
(5) In (1) or (2) above, the percentage R2 is preferably 30% or more.
(6) In any one of (1) to (5) above, the content c1 is preferably 0.6% by mass or less.
(7) In any one of (1) to (6) above, the content c1 is preferably 0.5% by mass or less.
(8) In any one of (1) to (7) above, the content c1 is preferably 0.01% by mass or more.
(9) In any one of (1) to (8) above, the content c2 is preferably 0.4% by mass or less.
(10) In any one of (1) to (9) above, the content c2 is preferably 0.3% by mass or less.
(11) In any one of (1) to (10) above, the content c2 is preferably 0.01% by mass or more.
(12) In any one of (1) to (11) above, the total c3 is preferably 0.7% by mass or less.
(13) In any one of (1) to (12) above, the total c3 is preferably 0.01% by mass or more.
(14) In any one of (1) to (13) above, the total c3 is preferably 0.02% by mass or more.
(15) In any one of (1) to (14) above, the positive electrode material preferably contains at least Sn.
(16) In any one of (1) to (15) above, the density of the positive electrode material is preferably 3.4 g/cm³ or more.
(17) In any one of (1) to (16) above, the density of the positive electrode material is preferably 4.8 g/cm³ or less.
(18) In any one of (1) to (17) above, the density of the positive electrode material is preferably 4.6 g/cm³ or less.
(19) In any one of (1) to (18) above, the cross-section is preferably octagonal.
(20) In any one of (1) to (19) above, the current collector is preferably a current collector punched out of a stretched sheet of lead or a lead alloy.
(21) In (20) above, the total length WLH of the inner dimensions of the longitudinal ribs and the total length WLW of the inner dimensions of the transverse ribs preferably satisfy WLH/WLW ≥ 0.8.
(22) In (21) above, WLH/WLW ≥ 1.3 is preferably satisfied.
(23) In any one of (1) to (22) above, the thickness of the inner rib is preferably 0.7 mm or more.
(24) In any one of (1) to (23) above, the thickness of the inner rib is preferably 3 mm or less.
(25) In any one of (1) to (24) above, the rib width of the inner rib is preferably 0.7 mm or more.
(26) In any one of (1) to (25) above, the rib width of the inner rib is preferably 3 mm or less.
(27) In any one of (1) to (26) above, the thickness of the first portion in the section C is preferably 55 pm or more.
(28) A method for manufacturing a lead-acid battery according to any one of (1) to (27) above includes the steps of: preparing the current collector; and obtaining the positive electrode plate that includes the current collector and the positive electrode material. The step of preparing the current collector includes the steps of preparing a rolled plate, punching the rolled plate to form an intermediate grid body having a plurality of intermediate ribs formed in a grid shape, and pressing the intermediate grid body from a thickness direction of the intermediate grid body to form at least some of the inner ribs. The pressing includes deforming at least some of the plurality of intermediate ribs so that at least one end in a rib width direction intersecting an extending direction of each of the intermediate ribs is thinner than a center in the rib width direction and that the percentage R2 is less than 50%.

Hereinafter, the present invention will be specifically described based on examples and comparative examples, but the present invention is not limited to the following examples.

### <<Lead-acid batteries A1 to A13 and lead-acid batteries B1 to B12>>

### (1) Preparation of current collector

A rolled sheet of a Pb-Ca-Sn alloy is punched, and an inner rib and/or a frame rib is pressed to obtain a current collector. Pressing is performed so that the percentage R2 of the second portion in the section C becomes the value in Table 2.

The specifications of the current collector are as follows.
Inner rib thickness: 0.95 mm
Height H of frame rib: 115 mm
Width W of frame rib: 137 mm
Shape of section C: Octagonal
Ratio of WLH to WLW: WLH/WLW = 1.47 (WLH = 2392 mm, WLW = 1628 mm)

### (2) Preparation of positive electrode plate

Next, a positive electrode paste containing lead powder, and an Sn additive and/or an Sb additive is prepared, and the grid part of the current collector is filled with the positive electrode paste, which is then cured and dried to prepare a non-chemically converted positive electrode plate. The filling amount of the positive electrode paste is adjusted so that the density of the positive electrode material after chemical conversion becomes 4.2 g/cm3.

At the time of preparing the positive electrode paste, the Sn additives and/or the Sb additives are added so that the contents c1 and c2 of Sn and Sb determined by the procedure described above become the values shown in Table 2, respectively. Tin sulfate and antimony trioxide are used as the Sn additive and the Sb additive, respectively.

### (3) Preparation of negative electrode plate

Lead powder, water, dilute sulfuric acid, barium sulfate, carbon black, and an organic expander (sodium lignin sulfonate) are mixed to prepare a negative electrode paste. An expanded grid made of a Pb-Ca-Sn alloy as a negative current collector is filled with the negative electrode paste, which is then cured and dried to obtain a non-chemically converted negative electrode plate.

### (4) Preparation of lead-acid battery

Each of non-chemically converted negative electrode plates is housed into a bag-like separator, and an electrode plate group t is formed of seven non-chemically converted negative electrode plates and six non-chemically converted positive electrode plates per cell.

The electrode plate group was inserted into a container made of polypropylene, the container was filled with an electrolyte solution, and chemical conversion was performed in the container to assemble flooded-type lead-acid batteries A1 to A13 and B1 to B12, each having a nominal voltage of 12 V and a rated capacity of 48 Ah (five-hour rate). A sulfuric acid aqueous solution having a specific gravity of 1.28 at 20°C is used as the electrolyte solution.

### [Evaluation 1: heavy-loading test]

A heavy-loading test is performed on a once fully charged lead-acid battery according to the procedure described above.

Table 2 shows the results of the lead-acid batteries A1 to A13 and B1 to B12.

**[Table 1]**

| Mouse anti-insulin antibody | | | |
|---|---|---|---|
| | Capacity of storage battery (5-hour rate) | | |
| | 21 Ah or more and 24 Ah or less | More than 24 Ah and 72 Ah or less | More than 72 Ah and 176 Ah or less |
| Discharge current (A) | 10 | 20 | 40 |
| Charge current (A) | 2.5 | 5 | 10 |

**[Table 2]**

| | R2 (%) | c1 (Sn) (% by mass) | c2 (Sb) (% by mass) | Number of deep cycles |
|---|---|---|---|---|
| B1 | 50 | 0 | 0 | 80 |
| B2 | | 0.01 | 0 | 80 |
| B3 | | 0.5 | 0 | 80 |
| B4 | | 0 | 0.01 | 80 |
| B5 | | 0 | 0.3 | 80 |
| B6 | | 0.01 | 0.01 | 80 |
| B7 | | 0.5 | 0.2 | 80 |
| B8 | | 0.5 | 0.3 | 80 |
| B9 | 40 | 0 | 0 | 70 |
| A1 | | 0.01 | 0 | 360 |
| A2 | | 0.5 | 0 | 360 |
| A3 | | 0 | 0.01 | 360 |
| A4 | | 0 | 0.3 | 360 |
| A5 | | 0.01 | 0.01 | 360 |
| A6 | | 0.5 | 0.2 | 360 |
| B10 | | 0.5 | 0.3 | 200 |
| B11 | 30 | 0 | 0 | 70 |
| A7 | | 0.01 | 0 | 360 |
| A8 | | 0.5 | 0 | 360 |
| A9 | | 0 | 0.01 | 360 |
| A10 | | 0 | 0.3 | 360 |
| A11 | | 0.01 | 0.01 | 360 |
| A12 | | 0.01 | 0.3 | 360 |
| A13 | | 0.5 | 0.2 | 360 |
| B12 | | 0.5 | 0.3 | 200 |

As shown in Table 2, at the percentage R2 of 50%, the number of deep cycles is 80 when the positive electrode material does not contain Sn and Sb (lead-acid battery B1), whereas the number of deep cycles remains unchanged at 80 when the positive electrode material contains Sn and/or Sb (lead-acid batteries B2 to B8). In a case where R2 is as large as 50%, it is considered that corrosion easily proceeds in the second portion during the deep cycles, and the elongation and distortion of the current collector easily occur, thus leading to the physical separation of the positive electrode material from the current collector It is thus considered that the above result is caused by the fact that even when Sn or Sb is added to the positive electrode material, the effect is not exhibited at all.

At the percentage R2 of less than 50%, the number of deep cycles decreases 70 (lead-acid batteries B9 and B11) as compared to the lead-acid battery B1 when the positive electrode material does not contain Sn and Sb. This is considered to be because, although the occurrence of the elongation and distortion of the current collector in the deep cycles is reduced, the adhesion between the positive electrode material and the current collector itself decreases at the initial stage and in the deep cycles, so that the PCL phenomenon has occurred due to accumulation of lead sulfate in the vicinity of the positive current collector. On the other hand, when the percentage R2 is less than 50%, the use of a positive electrode material containing a specific content of Sn and/or Sb greatly improves the number of deep cycles to 360. This is considered to be because, when the percentage R2 is less than 50%, the occurrence of the elongation and distortion of the current collector in the deep cycles is reduced, and the effect of forming the conductive path of Sn and/or Sb is exhibited sufficiently. When the percentage R2 is less than 50%, the adhesion between the positive electrode material and the current collector itself is considered to decrease in the initial stage or in the deep cycles. This is considered to be because the formation of the conductive path by Sn and/Sb prevents the accumulation of lead sulfate in the vicinity of the positive current collector, thereby preventing the occurrence of the PCL phenomenon and enabling high conductivity to be ensured in the positive electrode plate to prevent the softening of the positive electrode material. In the lead-acid batteries B10 and B12 in which the total content c3 of Sn and Sb is 0.8% by mass, the amount of liquid reduction due to gas generation is excessively large, and the number of deep cycles is as low as 200.

### <<Lead-acid batteries A14 to A18 and lead-acid batteries B13 to B15>>

The Sn additive and/or the Sb additive are added so that the contents c1 and c2 of Sn and Sb become the values shown in Table 3, respectively. Except for these, as in the case of the lead-acid battery A1, a positive electrode plate is prepared, lead-acid batteries A14 to A18 and B13 to B15 are assembled, and the heavy-loading test is performed.

Table 3 shows the results of the lead-acid batteries A14 to A18 and B13 to B15. Table 3 also shows the results of the lead-acid batteries A1 to A6, B9, and B10.

**[Table 3]**

| | R2 (%) | c1 (Sn) (% by mass) | c2 (Sb) (% by mass) | Number of deep cycles |
|---|---|---|---|---|
| B9 | | 0 | 0 | 70 |
| A1 | | 0.01 | 0 | 360 |
| A14 | | 0.1 | 0 | 360 |
| A15 | | 0.25 | 0 | 360 |
| A2 | | 0.5 | 0 | 360 |
| B13 | | 0.75 | 0 | 280 |
| B14 | | 1 | 0 | 200 |
| A3 | 40 | 0 | 0.01 | 360 |
| A16 | | 0 | 0.1 | 360 |
| A17 | | 0 | 0.2 | 360 |
| A4 | | 0 | 0.3 | 360 |
| B15 | | 0 | 0.5 | 200 |
| A5 | | 0.01 | 0.01 | 360 |
| A18 | | 0.01 | 0.3 | 360 |
| A6 | | 0.5 | 0.2 | 360 |
| B10 | | 0.5 | 0.3 | 200 |

As shown in Table 3, when R2 < 50% and when the positive electrode material contains Sn, and the content c1 of Sn is less than 0.75% by mass, the number of deep cycles is 360, and high life performance is obtained. In contrast, also in the case of the positive electrode material containing Sn, when the content c1 of Sn is 0.75% by mass or more, the number of deep cycles decreases. This is because the amount of liquid reduction has increased due to gas generation.

When R2 < 50% and when the positive electrode material contains Sb, and the content c2 of Sb is less than 0.50% by mass, the number of deep cycles is 360, and high life performance is obtained. In contrast, also in the case of the positive electrode material containing Sb, when the content c2 of Sb is 0.50% by mass or more, the liquid reduction due to gas generation becomes remarkable, and the deep cycle life deteriorates.

In the case of R2 < 50% and the positive electrode material containing Sn and Sb, when the total content c3 of Sn and Sb becomes 0.8% by mass, the amount of liquid reduction increases due to gas generation, and the number of deep cycles decreases (lead-acid battery B10).

From these results, when R2 < 50%, the content c1 of Sn is set to less than 0.75% by mass, the content c2 of Sb is less than 0.50% by mass, and the total c3 of c1 and c2 is less than 0.8% by mass, whereby high life performance in deep cycles can be ensured.

From the viewpoint of ensuring high life performance, the lower limit of the content c3 of Sn and Sb, which are additives, is preferably 0.01% by mass or more. For the same reason, the lower limit of each of the respective contents c1 and c2 of Sn and Sb is preferably 0.01% by mass or more, the contents c1 and c2 are preferably 0.5% by mass or less and 0.3% by mass or less, respectively, and c3 is preferably 0.7% by mass or less.

### <<Lead-acid batteries A19 to A24 and lead-acid batteries B16 to B17>>

When the positive electrode plate is manufactured, the filling amount of the positive electrode paste is adjusted so that the density after the formation of the positive electrode material becomes the value shown in Table 4. The Sn additive and/or the Sb additive are added so that the contents c1 and c2 of Sn and Sb become the values shown in Table 4, respectively. Except for these, as in the case of the lead-acid battery A1, a positive electrode plate is prepared, lead-acid batteries A19 to A24 and B16 to B17 are assembled, and the heavy-loading test is performed.

Table 4 shows the results of the lead-acid batteries A19 to A24 and B16 to B17. Table 4 also shows the results of the lead-acid batteries A1 to A6, B9, and B10.

**[Table 4]**

| | Density of positive electrode material (g/cm³) | R2 (%) | c1 (Sn) (% by mass) | c2 (Sb) (% by mass) | Number of deep cycles |
|---|---|---|---|---|---|
| B16 | 3.4 | 40 | 0 | 0 | 60 |
| A19 | | | 0.5 | 0 | 300 |
| A20 | | | 0 | 0.1 | 300 |
| A21 | | | 0.5 | 0.1 | 300 |
| B9 | 4.2 | | 0 | 0 | 70 |
| A1 | | | 0.01 | 0 | 360 |
| A2 | | | 0.5 | 0 | 360 |
| A3 | | | 0 | 0.01 | 360 |
| A4 | | | 0 | 0.3 | 360 |
| A5 | | | 0.01 | 0.01 | 360 |
| A6 | | | 0.5 | 0.2 | 360 |
| B10 | | | 0.5 | 0.3 | 200 |
| B17 | 4.6 | | 0 | 0 | 130 |
| A22 | | | 0.5 | 0 | 420 |
| A23 | | | 0 | 0.1 | 420 |
| A24 | | | 0.5 | 0.1 | 420 |

As shown in Table 4, even when the density of the positive electrode material is as low as 3.4 g/cm³ or relatively as high as 4.6 g/cm³, the number of deep cycles can be greatly improved by using a positive electrode material containing a specific content of Sn and/or Sb at R2 < 50%, as compared to a case where Sn and Sb are not contained. This is considered to be because, at such a density, the elongation and distortion of the current collector are easily reduced by the action of the percentage R2, and the effect of improving the conductivity by Sn and/or Sb is easily exhibited.

In the case of a low density of less than 4.2 g/cm³, the number of deep cycles tends to decrease because the conductive network is easily divided in the positive electrode material. However, by using a positive electrode material having R2 < 50% and containing a specific amount of Sn and/or Sb, the elongation and distortion of the current collector can be reduced, and the durability of the positive electrode material is improved, so that the effect of the conductive path by Sn and/or Sb can be easily exhibited, and high conductivity between the current collector and the positive electrode material can be easily ensured. Therefore, this high conductivity compensates for the lack of conductivity in the positive electrode material, and even when the positive electrode material has a low density, it is possible to ensure high life performance in the deep cycles.

As shown in Table 4, in the case of a high density of 4.2 g/cm³ or more, a particularly high life performance is obtained in deep cycles. This is considered to be because the conductivity of the entire positive electrode plate can be enhanced by the spread of the conductive network in the positive electrode material and the conductivity between the current collector and the positive electrode material due to the combination of R2 < 50% and Sn and/or Sb.

### INDUSTRIAL APPLICABILITY

The lead-acid battery according to the above aspect of the present invention can be applied to a valve regulated lead-acid battery and a flooded-type lead-acid battery and can be suitably used as a power source for starting a vehicle (automobile, motorcycle, etc.) or a power source for an industrial power storage apparatus such as an electric vehicle (forklift, etc.).

### DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode plate group
12: container
13: partition
14: cell chamber
15: lid
16: negative electrode terminal
17: positive electrode terminal
18: vent plug
100A, 100B: current collector
110: frame rib
111: upper element
112: lower element
113, 114: side element
120: inner rib
120A, B1: longitudinal rib
120B: transverse rib
130: lug
132: lower protrusion (foot)
210: first portion of longitudinal rib
220: second portion of longitudinal rib

## Claims

1. A lead-acid battery comprising:
a positive electrode plate;
a negative electrode plate; and
an electrolyte solution,
wherein the positive electrode plate includes a current collector and a positive electrode material held by the current collector,
the current collector has a frame rib, a lug provided on the frame rib, and inner ribs inside the frame rib,
the frame rib includes an upper element continuous with the lug, a lower element facing the upper element, and a pair of side elements coupling the upper element with the lower element,
the inner rib includes a longitudinal rib extending in a first direction from the upper element toward the lower element, and a transverse rib extending in a second direction from one of the side elements toward the other of the side elements,
a striped pattern of a metallic fibrous structure is seen in a cross-section perpendicular to the first direction of the longitudinal rib,
an outer peripheral region of the cross-section is made up of a first portion in which the fibrous structure extends along a contour of the cross-section and a second portion except for the first portion,
a percentage R2 of a length of the contour corresponding to the second portion to a total length of the contour of the cross-section is less than 50%,
the positive electrode material includes at least one selected from the group consisting of Sn and Sb,
a content c1 of Sn in the positive electrode material is less than 0.75% by mass,
a content c2 of Sb in the positive electrode material is less than 0.50% by mass, and
a total c3 of c1 and c2 is less than 0.8% by mass.

2. The lead-acid battery according to claim 1, wherein the percentage R2 is 40% or less.

3. The lead-acid battery according to claim 1, wherein the percentage R2 is 30% or less.

4. The lead-acid battery according to claim 1, wherein the percentage R2 is 20% or more.

5. The lead-acid battery according to claim 1, wherein the percentage R2 is 30% or more.

6. The lead-acid battery according to claim 1, wherein the percentage R2 is 20% or more and less than 50%.

7. The lead-acid battery according to any one of claims 1 to 5, wherein the positive electrode material contains at least Sn.

8. The lead-acid battery according to any one of claims 1 to 7, wherein a density of the positive electrode material is 3.4 g/cm³ or more and 4.8 g/cm³ or less.

9. The lead-acid battery according to any one of claims 1 to 8, wherein the cross-section is octagonal.

10. The lead-acid battery according to any one of claims 1 to 9, wherein the current collector is a current collector punched out of a stretched sheet of lead or a lead alloy.

11. The lead-acid battery according to any one of claims 1 to 10, wherein the content c1 of Sn in the positive electrode material is 0.6% by mass or less.

12. The lead-acid battery according to any one of claims 1 to 10, wherein the content c1 of Sn in the positive electrode material is 0.5% by mass or less.

13. The lead-acid battery according to any one of claims 1 to 10, wherein the content c1 of Sn in the positive electrode material is 0.01% by mass or more and less than 0.75% by mass.

14. The lead-acid battery according to any one of claims 1 to 13, wherein the content c2 of Sb in the positive electrode material is 0.4% by mass or less.

15. The lead-acid battery according to any one of claims 1 to 13, wherein the content c2 of Sb in the positive electrode material is 0.3% by mass or less.

16. The lead-acid battery according to any one of claims 1 to 13, wherein the content c2 of Sb in the positive electrode material is 0.01% by mass or more and less than 0.50% by mass.

17. The lead-acid battery according to any one of claims 1 to 16, wherein the total c3 of the content c1 of Sn in the positive electrode material and the content c2 of Sb in the positive electrode material is 0.7% by mass or less.

18. The lead-acid battery according to any one of claims 1 to 16, wherein the total c3 of the content c1 of Sn in the positive electrode material and the content c2 of Sb in the positive electrode material is 0.02% by mass or more.

19. The lead-acid battery according to any one of claims 1 to 16, wherein the total c3 of the content c1 of Sn in the positive electrode material and the content c2 of Sb in the positive electrode material is 0.01% by mass or more and less than 0.8% by mass.

20. A method for manufacturing the lead-acid battery according to any one of claims 1 to 6, the method comprising the steps of:
preparing the current collector; and
obtaining the positive electrode plate that includes the current collector and the positive electrode material,
wherein the step of preparing the current collector includes the steps of
preparing a rolled plate,
punching the rolled plate to form an intermediate grid body having a plurality of intermediate ribs formed in a grid shape, and
pressing the intermediate grid body from a thickness direction of the intermediate grid body to form at least some of the inner ribs, and
the pressing includes deforming at least some of the plurality of intermediate ribs so that at least one end in a rib width direction intersecting an extending direction of each of the intermediate ribs is thinner than a center in the rib width direction and that the percentage R2 is less than 50%.
